# EUROPEAN PATENT SPECIFICATION

(11) **EP 4 612 545 B1**
(45) Date of publication and mention of the grant of the patent: **14.10.2026**
(21) Application number: 23801012.8
(22) Date of filing: 02.11.2023
(51) Int. Cl.: G02C 5/22

(54) **HINGE ASSEMBLY FOR GLASSES AND GLASSES COMPRISING SUCH A HINGE ASSEMBLY**
SCHARNIERANORDNUNG FÜR BRILLEN UND BRILLE MIT SOLCH EINER SCHARNIERANORDNUNG
ENSEMBLE CHARNIÈRE POUR LUNETTES ET LUNETTES COMPRENANT UN TEL ENSEMBLE CHARNIÈRE

(30) Priority: 04.11.2022 IT 202200022752
(43) Date of publication of application: 10.09.2025
(73) Proprietor: Luxottica S.r.l., 32021 Agordo (BL) (IT)
(72) Inventor: DAL PONT, Moreno, 32100 Belluno (BL) (IT)
(74) Representative: Biallo, Dario
(86) International application number: PCT/IB2023/061051
(87) International publication number: WO 2024/095197

(56) References cited:
- EP-A2- 0 175 242
- FR-A5- 2 114 282
- US-A1- 2018 252 940
- US-A1- 2019 265 510
- US-A1- 2020 050 000

## Description

The present invention relates to a hinge assembly for glasses that may be used, particularly but not exclusively, in "smart" glasses.

The present invention also relates to glasses comprising such a hinge assembly.

Although such a hinge assembly may be used in all types of glasses, for the sake of simplicity, for illustrative and non-limiting purposes, we will only focus on "smart" glasses.

As known, "smart" glasses, also called virtual glasses or digital glasses, refer to a pair of glasses comprising electronic devices adapted to operate like a computer to support the activities carried out by the user wearing them, whether in the everyday and private sphere or in the work and business sphere or in any other particular sphere.

The "smart" glasses currently in use make it possible to display the needed information and/or objects on the lenses or to use voice commands to interact with the glasses themselves, thus saving time and money in many tasks, and also enabling the user to work more safely as both hands are free.

In more detail, the "smart" glasses available on the market today consist of electronic devices and software capable of playing videos, audio files, filming, running computer applications, recognising natural language, the shapes and objects arranged in the surrounding environment.

"Smart" glasses are provided with a displaying device, such as a display, typically integrated in the lenses of the frame for glasses or placed thereon, and an electronic processing and control unit, such as a controller or a battery, typically integrated in the frame of the glasses or in the temples thereof.

As known, there are, on the market, "smart" glasses provided with a bistable hinge.

The bistability of the hinge makes it possible to keep the temple of the frame for the glasses stationary and stable in the operating position it is in, i.e. open or closed, preventing it from moving accidentally and unintentionally, causing discomfort to the latter.

For example, document DE102020210683B3 describes a bistable hinge of a frame for glasses formed by a first articulation region configured to connect the hinge to the front of the frame for glasses and identify a first articulation axis, and by a second articulation region configured to connect the hinge to the temple of the frame for glasses and identify a second articulation axis, and having a recess, perpendicular to the first and second articulation axis, which serves as a guide to accommodate a cable connecting the front to the temple of the frame for glasses.

They are also known hinges that allow a further flexible extra-opening operating position, known as the "extra-flex" operating position, wherein the angle formed between the temple and the front of the frame for glasses is greater than 90 degrees when the temples are open.

The "extra-flex" operating position allows easier wearing by the user due to the extra-flexible opening of the temples, and greater comfort when these glasses are worn by the user.

Hinges that provide for the attainment of the "extra-flex" operating position will be referred to hereafter as flexible.

As known, the extra-opening position is reached by continuing the rotation of the temple after it has reached the opening position.

In other words, the extra-opening position is achieved by a further rotation of the temple, starting from the opening position, in the direction opposite to a rotation that would allow the temple to return to the closing position.

There are hinges on the market that are at the same time both bistable and flexible.

However, such hinges are composed of a large number of articulation elements, increasing the complexity of the hinge itself, as well as its size.

In addition, during the passage to the extra-opening position, the temple can take on incorrect positions that may lead to mechanical stress on the hinge itself, causing it to deteriorate and/or break.

In addition, generally, when the temple rotates to reach the extra-opening position, the end portion of the temple comes into contact with the front of the frame of the glasses with the risk, in the long term, of wearing and scraping the front of the frame itself. Further hinges are disclosed in FR2114282A5.

The object of the present invention is to overcome the above-mentioned drawbacks and in particular to devise a hinge assembly for glasses that is bistable and at the same time flexible and that is simpler and less bulky than the known ones.

Another object of the present invention is to provide a bistable yet flexible hinge assembly for glasses that makes it possible to preserve the integrity of the hinge during the passage from the opening to the extra-opening position or vice versa.

A further object of the present invention is to create a bistable and at the same time flexible hinge assembly for glasses that makes it possible to prevent the temple and front from wearing out.

These and other objects according to the present invention are achieved by making a hinge assembly for glasses as set forth in claim 1 and glasses comprising such a hinge assembly as set forth in claim 13. Further features of the hinge assembly for glasses are the subject-matter of the dependent claims.

The characteristics and advantages of a hinge assembly for glasses and glasses comprising such a hinge assembly according to the present invention will become more apparent from the following description, by way of example and not limitation, referring to the accompanying schematic drawings in which:

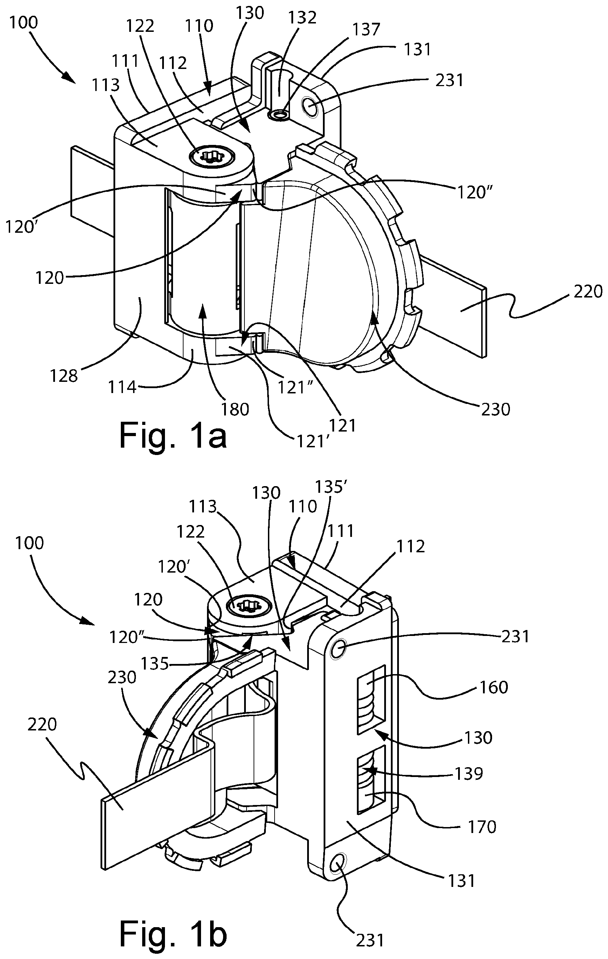

- figure 1a is a first perspective view of a hinge assembly for glasses according to the present invention when it is in a first stable opening position;
- figure 1b is a second perspective view of the hinge assembly for glasses of figure 1a;

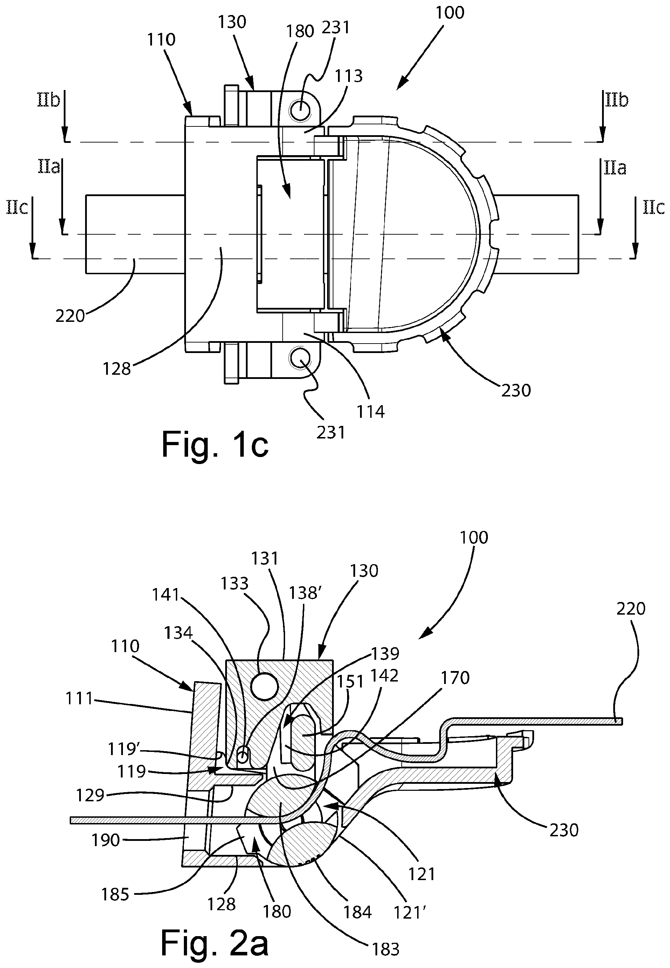

- figure 1c is a first front view, taken from the space between the temple and the front of the glasses, of the hinge assembly for glasses of figure 1a;

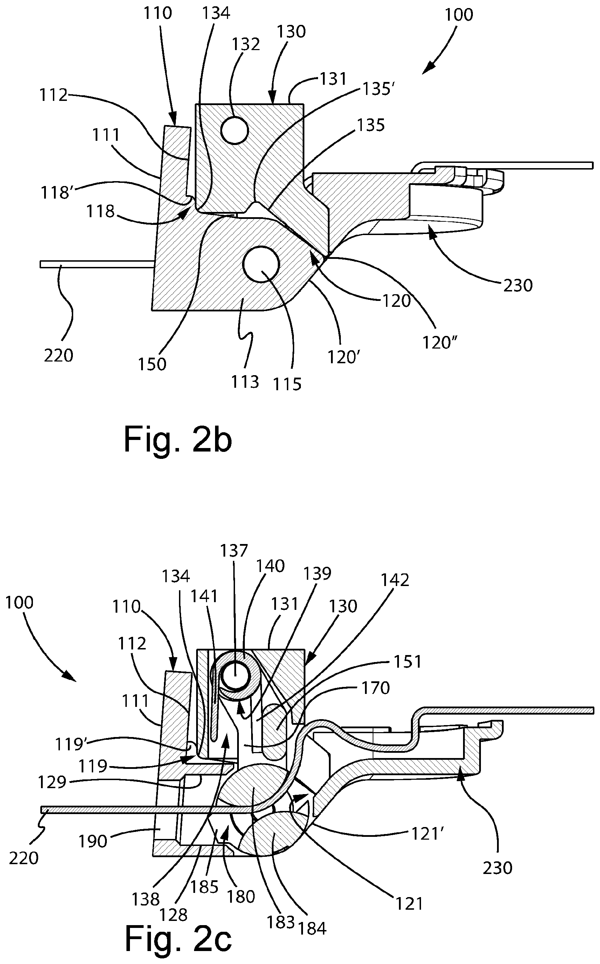

- figures 2a, 2b, 2c are three cross-section views along lines IIa-IIa, IIb-IIb, IIc-IIc respectively of the hinge assembly for glasses of figure 1c;

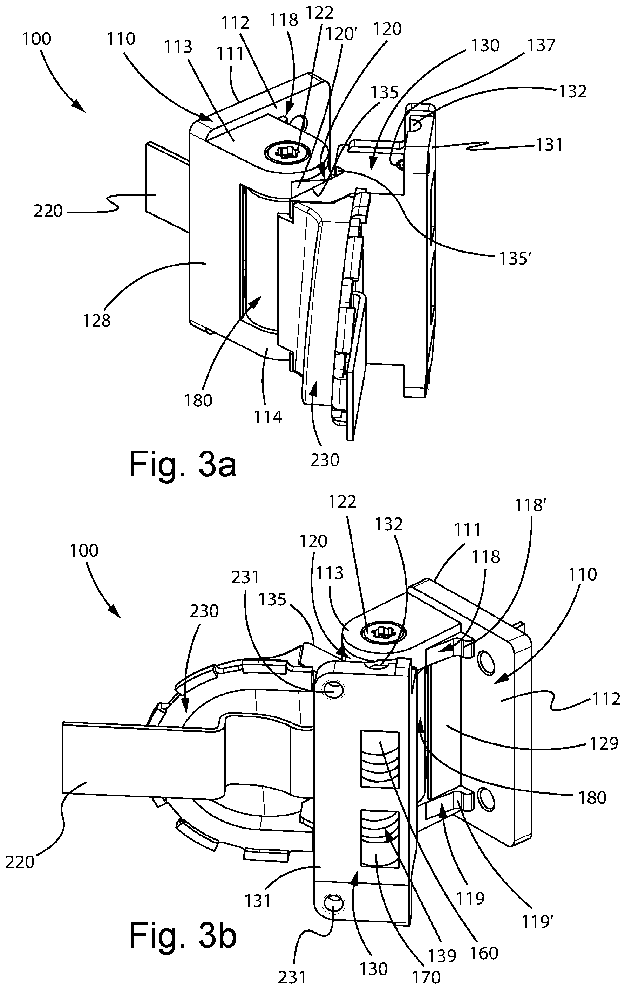

- figure 3a is a third perspective view of the hinge assembly for glasses according to the present invention when it is in an intermediate position between the first stable opening position and a second stable closing position;
- figure 3b is a fourth perspective view of the hinge assembly for glasses of figure 3a;

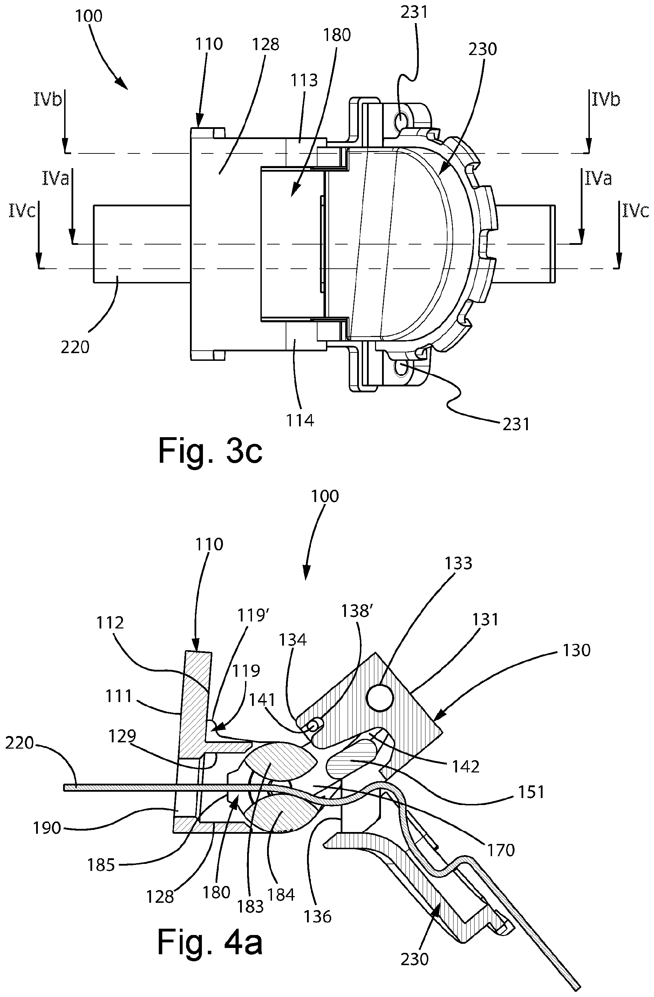

- figure 3c is a second front view, taken from the space between the temple and the front, of the hinge assembly for glasses of figure 3a;

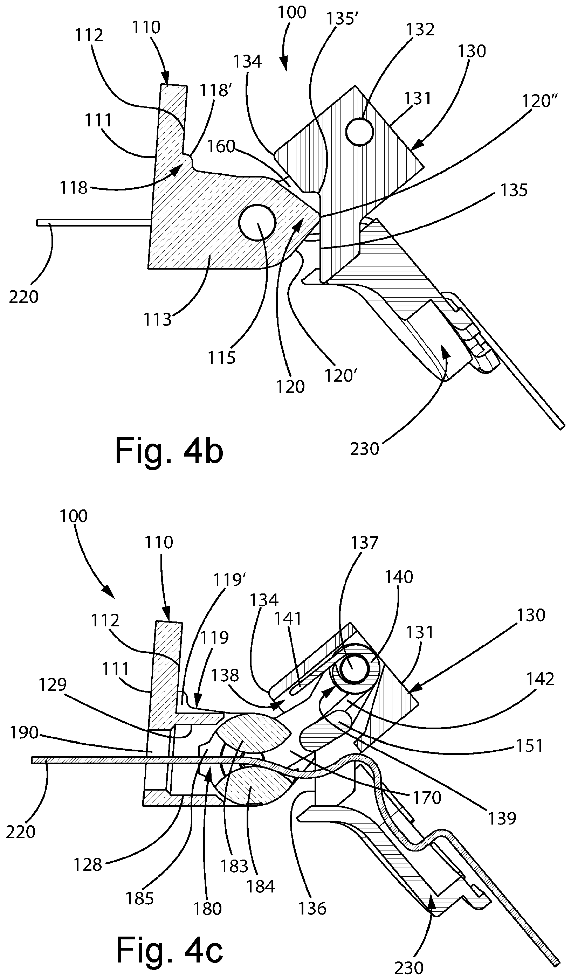

- figures 4a, 4b, 4c are three cross-section views along lines IVa-IVa, IVb-IVb, IVc-IVc respectively of the hinge assembly for glasses of figure 3c;

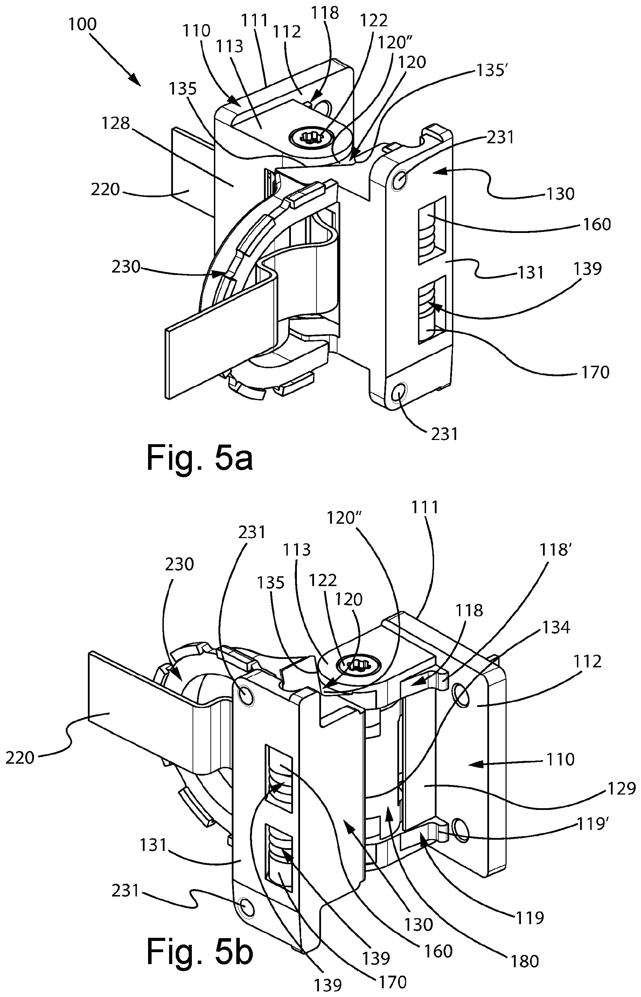

- figure 5a is a fifth perspective view of the hinge assembly for glasses according to the present invention when it is in the second stable closing position;
- figure 5b is a sixth perspective view of the hinge assembly for glasses of figure 5a;

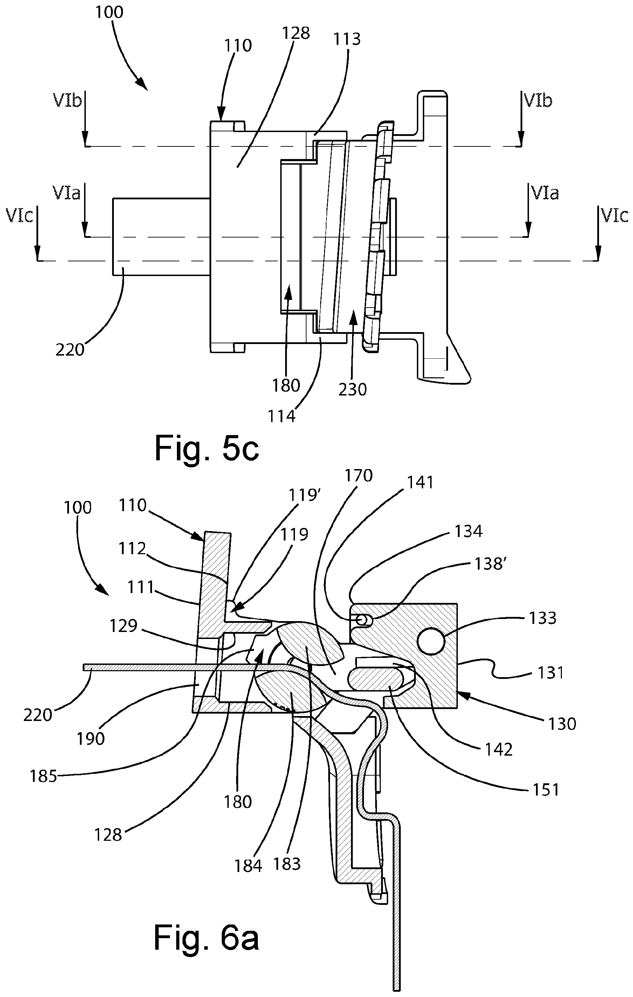

- figure 5c is a third front view, taken from the space between the temple and the front, of the hinge assembly for glasses of figure 5a;

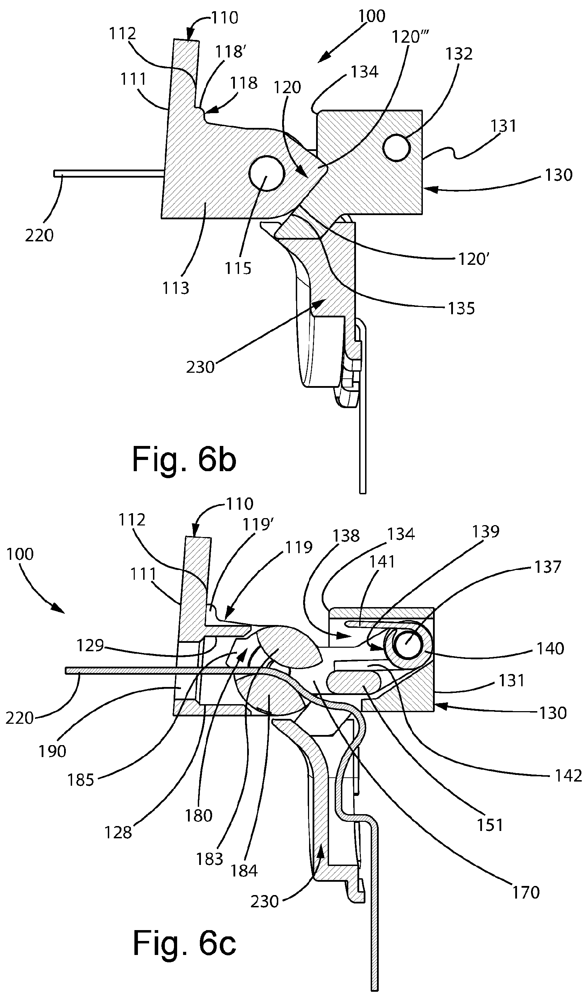

- figures 6a, 6b, 6c are three cross-section views along lines VIa-VIa, VIb-VIb, VIc-VIc respectively of the hinge assembly for glasses of figure 5c;

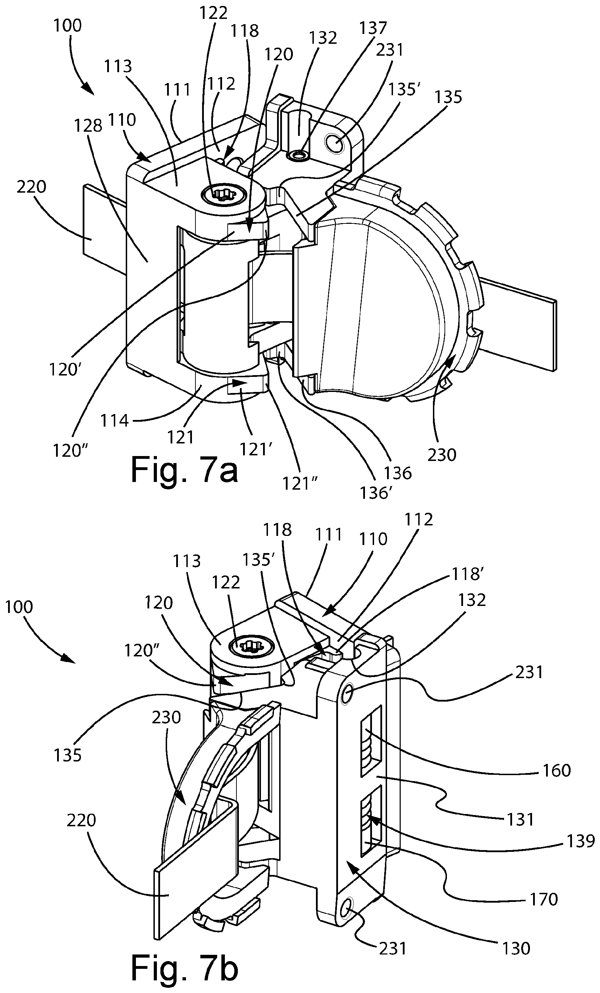

- figure 7a is a seventh perspective view of the hinge assembly for glasses according to the present invention when it is in a third unstable extra-opening position;
- figure 7b is an eighth perspective view of the hinge assembly for glasses of figure 7a;

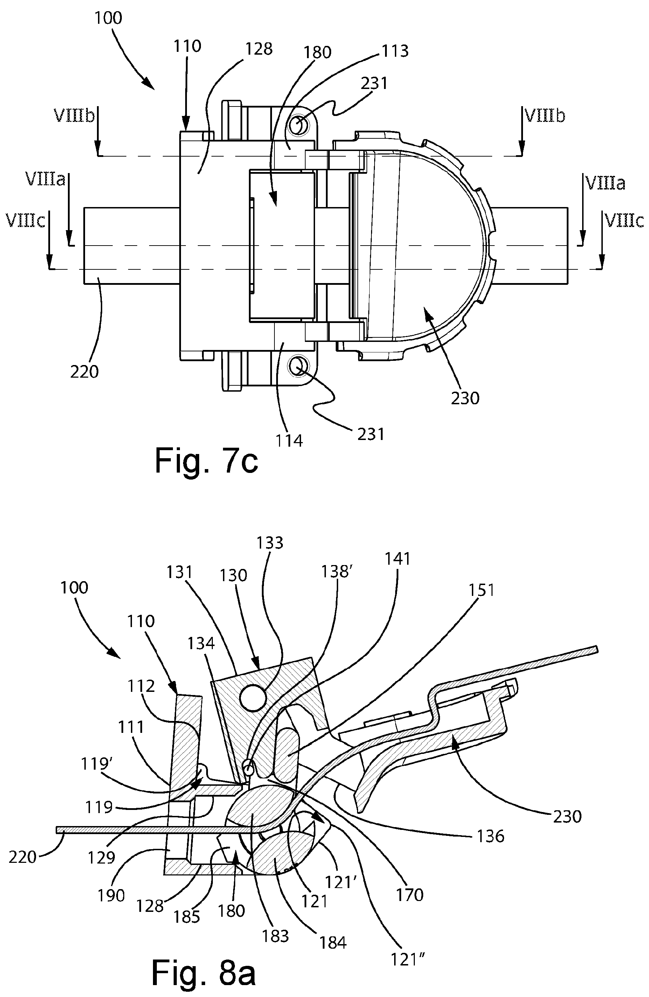

- figure 7c is a fourth frontal view, taken from the space between the temple and the front, of the hinge assembly for glasses of figure 7a;

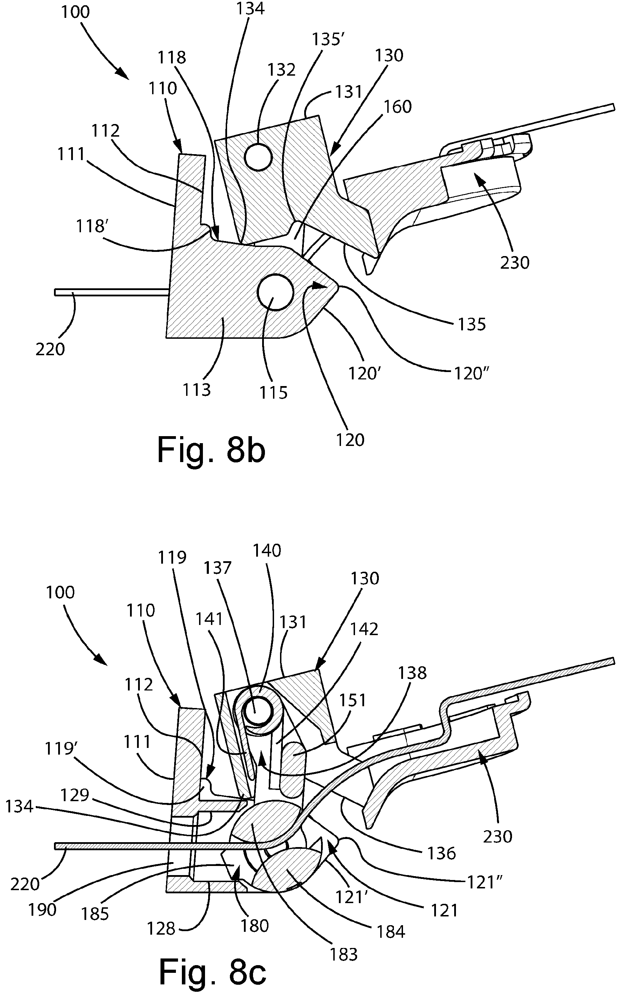

- figures 8a, 8b, 8c are three cross-section views along lines VIIIa-VIIIa, VIIIb-VIIIb, VIIIc-VIIIc respectively of the hinge assembly for glasses of figure 7c;
- figure 9 is a ninth perspective exploded view of the hinge assembly for glasses according to the present invention;

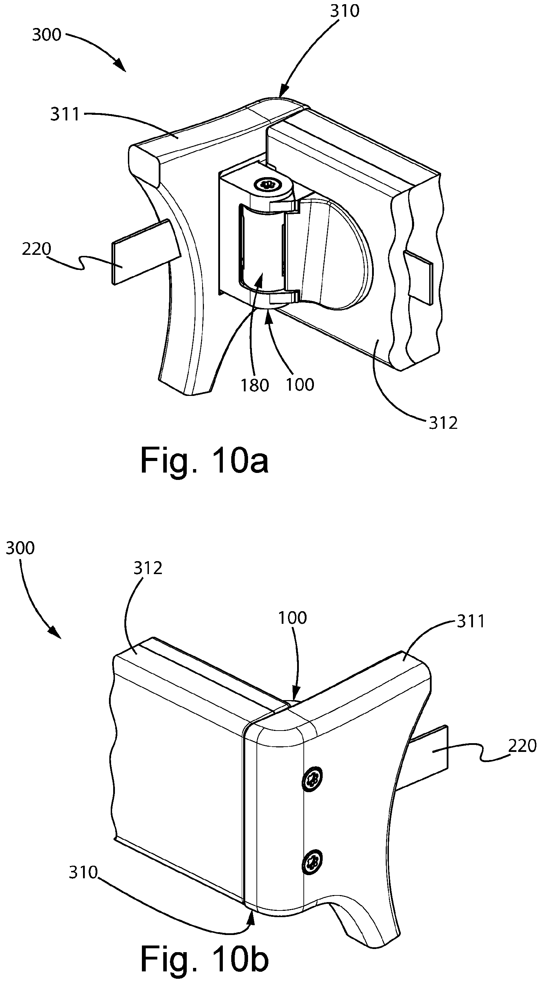

- figures 10a and 10b are two partial perspective schematic views of glasses comprising a hinge assembly according to the present invention;
- figure 11a is a perspective view of an alternative embodiment of the hinge assembly for glasses according to the present invention;
- figure 11b is a partial perspective schematic view of glasses comprising the hinge assembly of figure 11a. With reference to the attached figures, a hinge assembly for glasses is globally referred to as 100. The hinge assembly for glasses 100 may be advantageously mounted in a pair of glasses 300.

Such glasses 300 comprise a frame 310 in turn comprising a front 311 adapted to carry two lenses and two temples 312 adapted to allow a user to wear glasses 300, two hinge assemblies for glasses 100 each of which couples a respective temple 312 to the front 311.

In one particular embodiment, the glasses 300 are of the "smart" type. In this case, the glasses 300 also comprise an electrical cable 220, preferably flexible, adapted to electrically connect electrical and/or electronic devices to each other installed in the front 311 and in the temples 312.

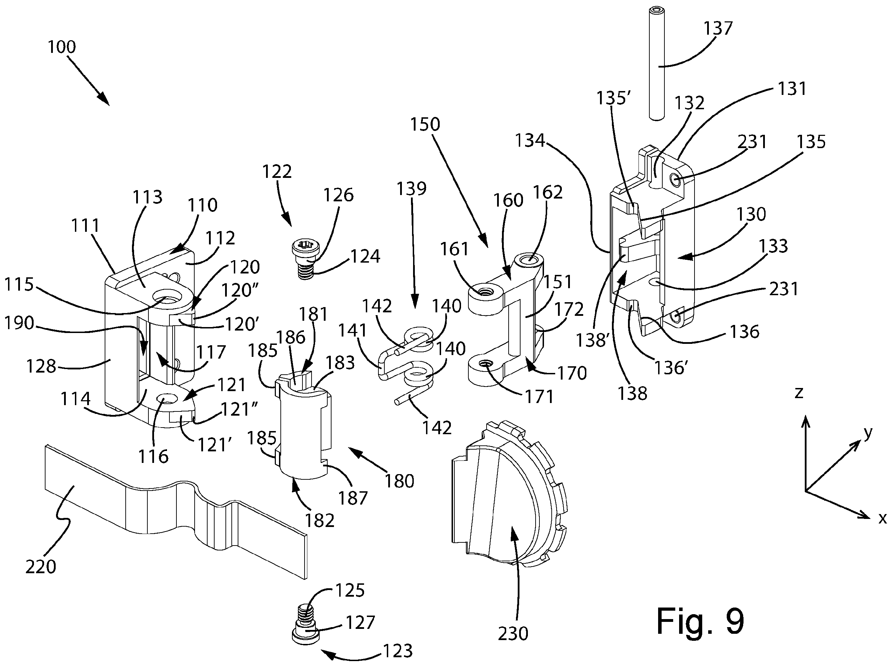

In the present description, reference will be made for simplicity and clarity of exposition to a Cartesian axis system xyz represented in the figures comprising a transverse axis x, a longitudinal axis y and a vertical axis z, and to an orientation of the hinge assembly for glasses 100 such as the one shown in figure 9.

The hinge assembly for glasses 100 comprises a support plate 110 having a first face 111 substantially flat and a second face 112 substantially flat opposite and parallel to the first face 111. In particular, the first face 111 is intended to be applied to a front 311 of the frame 310. Furthermore, the support plate 110 comprises a first cantilevered portion 113 and a second cantilevered portion 114 parallel and opposite to each other extending from the second face 112 in a direction substantially perpendicular to it, i.e. in a direction substantially parallel to the transverse axis x. In more detail, the cantilevered portions 113, 114 present a first through hole 115 and a second through hole 116 opposite and aligned with each other along a direction substantially parallel to the vertical axis z.

The two cantilevered portions 113, 114 identify a free space between them that creates a receiving seat 117.

The hinge assembly for glasses 100 also comprises a support body 130 intended to be applied to the temple 312. In particular, the support body 130 is box-shaped and has a substantially flat first face 131 intended to be attached to the temple 312.

Advantageously, the support body 130 is rotatably coupled to the support plate 110 in such a way that the hinge assembly for glasses 100 is capable of taking on a first stable opening position corresponding to the position wherein the temples 312 of the glasses 300 are open and the glasses 300 can be worn, a second stable closing position corresponding to the position wherein the temples 312 of the glasses 300 are closed and the glasses 300 cannot be worn, and a third unstable extra-opening position wherein the temples 312 are open beyond the first stable opening position.

The support body 130 comprises a third hole 132 and a fourth hole 133 coaxial between them and having axes substantially parallel to the vertical direction z. Advantageously, the support body 130 and the support plate 110 comprise respective interaction elements 118, 119, 120, 121, 134, 135, 136 adapted to guide the reciprocal rotation of the support body 130 and the support plate 110 between the first stable opening position of the hinge assembly for glasses 100 and the second stable closing position of the hinge assembly for glasses 100, and between the first stable opening position of the hinge assembly for glasses 100 and the third unstable extra-opening position of the hinge assembly for glasses 100.

The hinge assembly for glasses 100 also comprises an arm element 150 that presents a first arm portion 160 and a second arm portion 170 spaced and parallel to each other, and a bridge connection portion 151 that connects the first arm portion 160 and the second arm portion 170 between them.

The first arm portion 160 presents a first perforated end portion 161 arranged at the first through hole 115 and a second perforated end portion 162 arranged at the third hole 132. The second arm portion 170 presents a third perforated end portion 171 arranged at the second through hole 116 and a fourth perforated end portion 172 arranged at the fourth hole 133.

The hinge assembly for glasses 100 also comprises a first coupling element 122 and a second coupling element 123 which cross at least partially the first through hole 115 and the second through hole 116, respectively, and couple with the first perforated end portion 161 and the third perforated end portion 171, respectively.

Preferably, the first perforated end portion 161 and the third perforated end portion 171 have threaded holes. In such a case, the first coupling element 122 and the second coupling element 123 have corresponding threaded ends 124, 125 adapted to couple respectively with the threaded holes of the first perforated end portion 161 and the third perforated end portion 171. In addition, the first coupling element 122 and the second coupling element 123 have respective cylindrical portions 126, 127 adapted to allow the rotation of the coupling elements 122, 123 within the first through hole 115 and the second through hole 116.

The first coupling element 122 and the second coupling element 123 are for example made in the form of a screw with a threaded end portion of the stem and a non-threaded intermediate cylindrical portion.

The second perforated end portion 162 and the fourth perforated end portion 172 are housed in the support body 130 so as to be coaxial with respect to the third hole 132 and the fourth hole 133.

In addition, the third hole 132, the second perforated end portion 162, the fourth perforated end portion 172 and the fourth hole 133 are crossed by at least one coupling pin 137.

The second perforated end portion 162 and the fourth perforated end portion 172 are free to rotate with respect to the at least one coupling pin 137.

The support body 130 further comprises a housing chamber 138 open towards the outside and in communication with the third hole 132 and the fourth hole 133.

In more detail, the housing chamber 138 is delimited along the vertical direction z by two opposite, preferably parallel, boundary walls. The third hole 132 is perforated on a first of the boundary walls and the fourth hole 133 is perforated on a second of the boundary walls so that these third 132 and fourth holes 133 are coaxial with each other.

The hinge assembly for glasses 100 further comprises a torsion spring 139 housed in the housing chamber 138 and having at least one tubular portion 140 at least partially crossed by the at least one coupling pin 137, a first torsion portion 141 in contrast against an inner wall of the housing chamber 138 and at least one second torsion portion 142 in contrast against the bridge connection portion 151.

The first torsion portion 141 moves closer to at least one second torsion portion 142 loading the torsion spring 139 with a twisting moment when the hinge assembly for glasses 100 is pushed to pass from the first stable opening position to the third unstable extra-opening position. On the other hand, the hinge assembly 100 for glasses returns from the third unstable extra-opening position to the first stable opening position when released for the effect of the loaded twisting moment of the torsion spring 139.

In the embodiment shown, the torsion spring 139 is of the double torsion type comprising two tubular portions 140 and two opposite second torsion portions 142, and wherein the first torsion portion 141 is bridge-shaped. In such a case, the housing chamber 138 presents internally a protruding anchorage portion 138' that extends from a wall of the housing chamber 138. In addition, the first torsion portion 141 is anchored to the protruding anchorage portion 138'.

Preferably, the protruding anchorage portion 138' is crossed by the at least one coupling pin 137. Preferably, the two tubular portions 140 are completely crossed by the at least one coupling pin 137.

In one alternative embodiment, the hinge assembly for glasses 100 comprises two coupling pins 137 and each of the two tubular portions 140 is partially crossed by one of these coupling pins 137 respectively. In such a case, a first pin of the two coupling pins 137 crosses the third hole 132 and the second perforated end portion 162, while a second pin of the two coupling pins 137 crosses the fourth hole 133 and the fourth perforated end portion 172.

When the hinge assembly for glasses 100 is in the first stable opening position, a passage can be made to the third unstable extra-opening position by pushing the support body 130 in a direction opposite to what would be done to reach the second stable closing position. By forcing the rotation of the support body 130, the support body 130 is forced to rotate around an axis passing through the third hole 132 and the fourth hole 133. Since the second perforated end portion 162 and the fourth perforated end portion 172 are aligned with the third hole 132 and the fourth hole 133, during the rotation of the support body 130 described above, the arm element 150 does not rotate.

Also in the passage from the first stable opening position to the third unstable extra-opening position, the support body 130 rotates until it touches the arm element 150, thus defining the third unstable extra-opening position. During such passage, the first torsion portion 141 anchored to the protruding anchorage portion 138' rotates integrally with the support body 130 and moves closer to the second torsion portions 142 which are in contrast against the bridge connection portion 151; during such rotation of the support body 130, the arm element 150 does not rotate and the bridge connection portion 151 thus remains stationary with respect to the support body 130. Consequently, the distance between the first torsion portion 141 and the second torsion portions 142 is reduced with the rotation of the support body 130 when the hinge assembly for glasses 100 is pushed to pass from the first stable opening position to the third unstable extra-opening position. The first torsion portion 141 thereby loads the torsion spring 139 with a twisting moment.

At this point, when the hinge assembly for glasses 100 is released, the loaded twisting moment of the torsion spring 139 moves the first torsion portion 141 away from the second torsion portions 142; in this case, the second torsion portions 142 remain in contact with the bridge connection portion 151, which, as described above, remains stationary with respect to the support body 130, and the first torsion portion 141 engaged with the protruding anchorage portion 138' pushes the support body 130, which it is integral with, to rotate. The hinge assembly 100 for glasses thereby returns from the third unstable extra-opening position to the first stable opening position.

Preferably, the interaction elements 118, 119, 120, 121, 134, 135, 136 comprise at least one guide element 118, 119 interposed between the first cantilevered portion 113 and the second cantilevered portion 114. In addition, the at least one guide element 118, 119 presents a respective endstroke abutment portion 118', 119'.

The interaction elements 118, 119, 120, 121, 134, 135, 136 also comprise a guide end 134 of the support body 130. The guide end 134 is shaped to slide on the at least one guide element 118, 119 in order to guide the reciprocal rotation of the support body 130 and the support plate 110 between the first stable opening position and the third unstable extra-opening position. In addition, the guide end 134 is configured to be in contact with the endstroke abutment portion 118', 119' when the hinge assembly for glasses 100 is in the first stable opening position.

Preferably the at least one guide element 118, 119 is made in a single piece with the support plate 110. In this case, the at least one guide element 118, 119 may protrude from the second face 112 of the support plate 110.

Alternatively, the at least one guide element 118, 119 is coupled to the support plate 110. More specifically, the at least one guide element 118, 119 is coupled to the second face 112 of the support plate 110.

In the embodiment shown, the at least one guide element 118, 119 is in number equal to two, each one arranged at a respective cantilevered portion 113, 114.

The interaction elements 118, 119, 120, 121, 134, 135, 136 also comprise a first guide projection or first cam 120 and a second guide projection or second cam 121 made on the first cantilevered portion 113 and the second cantilevered portion 114, respectively.

The first guide projection or first cam 120 and the second guide projection or second cam 121 are parallel and opposite to each other.

The interaction elements 118, 119, 120, 121, 134, 135, 136 also comprise at least one free abutment wall 135, 136 of the support body 130 configured to slide on the first cam 120 and second cam 121 to guide the reciprocal rotation of the support body 130 and support plate 110 between the first stable opening position and the second stable closing position.

Furthermore, the first guide projection 120 and the second guide projection 121 respectively present a first flat abutment portion 120' and a second flat abutment portion 121' on which the at least one free abutment wall 135, 136 abuts and stops by identifying the second stable closing position.

In the embodiment shown, the at least one free abutment wall 135, 136 is in number equal to two; in this case, the free abutment walls 135, 136 correspond to the lateral walls of two free edges of the support body 130 facing the first cantilevered portion 113 and the second cantilevered portion 114, respectively.

In the case where there is only one free abutment wall 135, 136 the support body 130 has only one wall facing the first cantilevered portion 113 and the second cantilevered portion 114.

In more detail, when the hinge assembly for glasses 100 is in the first stable opening position, the guide end 134 is in contact and in abutment with the endstroke abutment portion 118', 119'.

When the hinge assembly for glasses 100 passes from the first stable opening position to the third unstable extra-opening position, the guide end 134 slides along the at least one guide element 118, 119 detaching and moving away from the endstroke abutment portion 118', 119'.

When the hinge assembly for glasses 100 passes from the first stable opening position to the second stable closing position, the at least one free abutment wall 135, 136 slides along the first guide projection 120 and the second guide projection 121; during such passage, the support body 130 performs a first rotary movement around the axis passing through the first through hole 115 and the second through hole 116 of the cantilevered portions 113, 114 of the support plate 110 quantifiable by a determined first angular excursion. Conversely, when the hinge assembly for glasses 100 passes from the second stable closing position to the first stable opening position, the at least one free abutment wall 135, 136 slides, as in the previous case, along the first guide projection 120 and the second guide projection 121; during such passage, the support body 130 performs a second rotary movement around the axis passing through the first through hole 115 and the second through hole 116 in the direction opposite to the one previously described and quantifiable by a determined second angular excursion equal and opposite to the first angular excursion of the first rotary movement.

Thus, during the passage of the hinge assembly 100 from the first stable opening position to the second stable closing position or vice versa, the hinge assembly for glasses 100 no longer rotates about the axis passing through the third hole 132 and the fourth hole 133 as it did during the passage of the hinge assembly for glasses 100 from the first stable opening position to the third unstable extra-opening position or vice versa.

In addition, during the passage from the first stable opening position to the second stable closing position, the support body 130 can continue to rotate until the at least one free abutment wall 135, 136 abuts with the first flat abutment portion 120' and the second flat abutment portion 121'. At this point, the second stable closing position is identified and the support body 130 cannot continue to rotate.

Preferably, the at least one free abutment wall 135, 136 presents a first perimetric recess 135' and a second perimetric recess 136' facing the first cantilevered portion 113 and the second cantilevered portion 114, respectively. In this case, the first guide projection 120 presents a first abutting protrusion 120'' and the second guide projection 121 presents a second abutting protrusion 121".

The first abutting protrusion 120" and the second abutting protrusion 121" are shaped to fit into the first perimetric recess 135' and the second perimetric recess 136', respectively, when the hinge assembly for glasses 100 is in the second stable closing position.

The first abutting protrusion 120" and the first perimetric recess 135' have complementary shapes between them.

The second protrusion 121" and the second perimetric recess 136' have complementary shapes between them.

In case the at least one free abutment wall 135, 136 are two, furthermore, the first perimetric recess 135' and the second perimetric recess 136' are arranged on the lateral walls of the two free edges of the support body 130.

In the embodiment shown, when the at least one free abutment wall 135, 136 abuts on the first flat abutment portion 120' and the second flat abutment portion 121', the first abutting protrusion 120' is inserted into the first perimetric recess 135' and the second abutting protrusion 121' is inserted into the second perimetric recess 136'.

In addition, the hinge assembly for glasses 100 comprises a cover element 230 integral with the support body 130. The cover element 230 may be coupled with the support body 130 or made in a single piece with such a support body 130. The cover element 230 is configured to abut on the first cantilevered portion 113 and the second cantilevered portion 114 when the hinge assembly for glasses 100 is in the second stable closing position.

In more detail, during the passage from the first stable opening position to the second stable closing position, the support body 130 can continue to rotate until the cover element 230 abuts on the first cantilevered portion 113 and the second cantilevered portion 114; at this point, the second stable closing position is identified and the support body 130 cannot continue to rotate.

In the particular embodiment wherein the glasses 300 are of the "smart" type, the hinge assembly for glasses 100 also comprises a masking and guide body 180 for the electrical cable 220 which extends along the axis z between a first end 181 and a second end 182. Such a masking and guide body 180 for the electrical cable 220 is interposed between the two cantilevered portions 113, 114 in the receiving seat 117 such that the first end 181 faces the first cantilevered portion 113 and the second end 182 faces the second cantilevered portion 114.

In such a case, the first perforated end portion 161 of the first arm portion 160 is interposed between the first end 181 of the masking and guide body 180 for the electrical cable 220 and the first cantilevered portion 113. The third perforated end portion 171 of the second arm portion 170 is interposed between the second end 182 of the masking and guide body 180 for the electrical cable 220 and the second cantilevered portion 114.

Preferably the masking and guide body 180 for the electrical cable 220 comprises a first support portion 183 and a second support portion 184, spaced apart from each other, which extend in length between the first end 181 and the second end 182, and at least one bridge element 185 connecting these support portions 183, 184 to each other. The two support portions 183, 184 therefore face each other and define a free interspace between them.

Preferably, the support portions 183, 184 have two perimetric abutment walls 186, 187 projecting along a direction substantially parallel to the vertical axis z beyond the first end 181 and at the second end 182 creating two housing seats for the first perforated end portion 161 and the third perforated end portion 171.

The masking and guide body 180 for the electrical cable 220 cannot move out of the receiving seat 117 because in the vertical direction z its movement is limited by the presence of the first perforated end portion 161 and the third perforated end portion 171, in the transverse plane xy its movement is limited by the interference between the perimetric abutment walls 186, 187 and the first perforated end portion 161 and the third perforated end portion 171.

The masking and guide body 180 for the electrical cable 220 is, on the other hand, free to rotate around the axis passing through the first through hole 115 and the second through hole 116.

Preferably, the support plate 110 comprises a first side wall 128 and a second side wall 129 connecting the first cantilevered portion 113 to the second cantilevered portion 114. In such a case, the at least one guide element 118, 119 may be made in a single piece with the second side wall 129.

Preferably, the support plate 110 also comprises an opening 190 positioned along the vertical direction z between the first cantilevered portion 113 and the second cantilevered portion 114 and along the longitudinal direction y between the two side walls 128, 129.

Preferably, the support body 130 comprises at least one anchorage portion 231 adapted to be attached to the temple 312 of the glasses 300. In detail, the temple 312 is interposed between the at least one anchorage portion 231 of the support body 130 and the cover element 230.

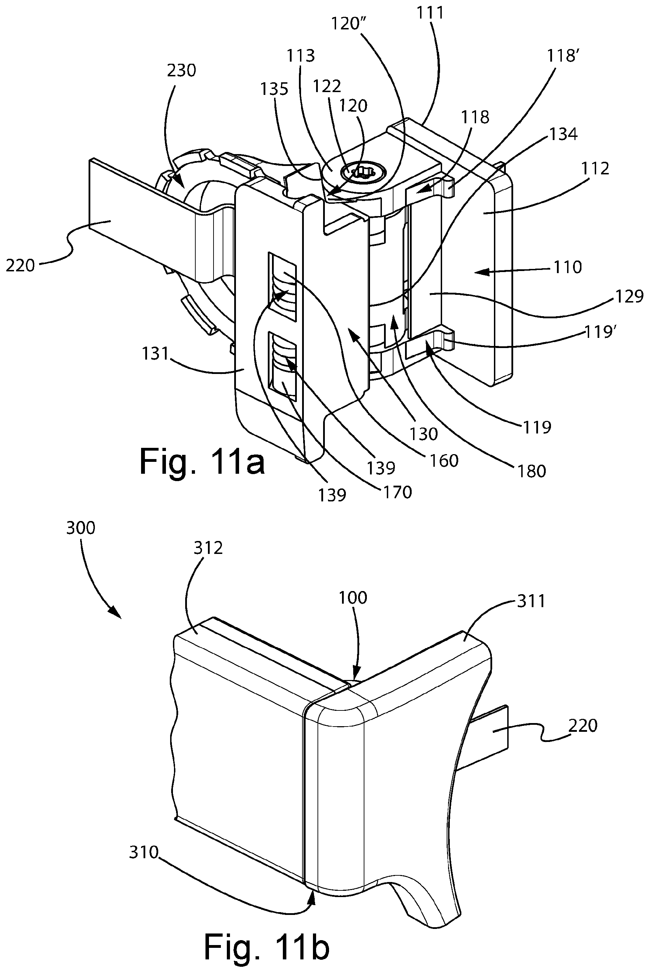

In the alternative embodiment shown in figure 11b, the glasses 300 comprise a hinge assembly for glasses 100 such as that shown in figure 11a, wherein the support body 130 is applied to the temple 312 of the glasses 300 by, for example, gluing or over-injection and, similarly, the support plate 110 is attached to the front 311 of the glasses 300 by, for example, gluing or over-injection.

In detail, the electrical cable 220 coming from the front 311 of the glasses 300 crosses the opening 190 of the support plate 110 and the interspace between the support portions 183, 184 engaging with engagement portions (not shown) of the cover element 230.

When the hinge assembly for glasses 100 is in the first stable opening position, the at least one bridge element 185 of the masking and guide body 180 for the electrical cable 220 is in contact with and abuts on the first side wall 128 of the support plate 110; in addition, the electrical cable 220 is in contact with and abuts on a surface of the first support portion 183 of the masking and guide body 180 for the electrical cable 220.

When the hinge assembly for glasses 100 is in the second stable closing position, the at least one bridge element 185 of the masking and guide body 180 for the electrical cable 220 is in contact with and abuts on the second side wall 129 of the support plate 110; in addition, the electrical cable 220 is in contact with and abuts on a surface of the second support portion 184 of the masking and guide body 180 for the electrical cable 220.

When the hinge assembly for glasses 100 passes from the first stable opening position to the second stable closing position, the electrical cable 220 is dragged in rotation by the cover element 230 which causes it to detach from the first support portion 183 until contacting the second support portion 184. At this point, the electrical cable 220 drags in rotation the masking and guide body 180 for the electrical cable 220, the at least one bridge element 185 is detached from the first side wall 128 and rotates together with the masking and guide body 180 for the electrical cable 220 towards the second side wall 129 of the support plate 110. During an initial step of the rotation of the support body 130, the masking and guide body 180 for the electrical cable 220 does not rotate until the electrical cable 220 abuts on the second support portion 184. The masking and guide body 180 for the electrical cable 220, therefore, rotates with a first angular delay with respect to the support body 130. During a final step of the rotation of the support body 130, the masking and guide body 180 for the electrical cable 220 does not rotate because the at least one bridge element 185 abuts on the second side wall 129. The support body 130 continues to rotate until the at least one free abutment wall 135, 136 abuts and stops on the first flat abutting portion 120' and the second flat abutting portion 121' and/or the cover element 230 abuts on the first cantilevered portion 113 and the second cantilevered portion 114 determining a second angular delay of the masking and guide body 180 for the electrical cable 220 with respect to the support body 130.

Preferably the first angular delay is comprised between 1° and 45°.

Preferably the second angular delay is comprised between 1° and 45°.

Preferably, the first angular delay is substantially equal to the second angular delay.

In the passage from the first stable opening position to the second stable closing position, the electrical cable 220 is not subject to the first angular excursion but to a third angular excursion obtained by subtracting the first angular delay and the second angular delay from the first angular excursion. Preferably, as visible in the figure, the third angular excursion is 45 degrees.

When the hinge assembly for glasses 100 passes from the second stable closing position to the first stable opening position, the electrical cable 220 is dragged in rotation by the cover element 230 which causes it to detach from the second support portion 184 until contacting the first support portion 183. At this point, the electrical cable 220 drags in rotation the masking and guide body 180 for the electrical cable 220, the at least one bridge element 185 is detached from the second side wall 129 and rotates together with the masking and guide body 180 for the electrical cable 220 towards the first side wall 128 of the support plate 110.

During an initial step of the rotation of the support body 130, the masking and guide body 180 for the electrical cable 220 then rotates with the second angular delay with respect to the support body 130. During a final step of the rotation of the support body 130, the masking and guide body 180 for the electrical cable 220 does not rotate as the bridge element 185 abuts on the first side wall 128, but the support body 130 continues to rotate until the guide end 134 reaches the endstroke abutment portion 118', 119' determining the first angular delay of the masking and guide body 180 for the electrical cable 220 with respect to the support body 130.

Therefore, the distance between the side walls 128, 129 is such that the first angular delay between the rotation of the support body 130 and the rotation of the masking and guide body 180 for the electrical cable 220 and the second angular delay between the rotation of the support body 130 and the rotation of the masking and guide body 180 for the electrical cable 220 are determined.

The characteristics of the hinge assembly for glasses and of the glasses covered by the present invention are clear from the description given, as are their advantages.

In fact, the hinge assembly for glasses according to the present invention is bistable and is both flexible and less bulky than those known thanks to the torsion spring described.

Furthermore, the hinge assembly for glasses according to the present invention allows to preserve the integrity of the hinge itself during the passage of the temple from the opening position to the extra-opening position or vice versa, and to prevent wear of the temple and the front thanks to the described interaction elements. Finally, it is clear that the hinge assembly for glasses and the glasses thus conceived are susceptible to many modifications and variations within the scope of the claimed subject-matter.

## Claims

1. Hinge assembly for glasses (100) comprising:
- a support plate (110) having a first face (111) substantially flat intended to be applied to a front (311) of a frame (310) for glasses (300), and a second face (112) substantially flat opposite and parallel to said first face (111), said support plate (110) comprising a first cantilevered portion (113) and a second cantilevered portion (114) parallel and opposite to each other extending from said second face (112) in a direction substantially perpendicular to it, said cantilevered portions (113, 114) respectively presenting a first through hole (115) and a second through hole (116) opposite and aligned with each other along a vertical direction z;
- a support body (130) intended to be applied to a temple (312) for glasses (300), said support body (130) being rotatably coupled to said support plate (110), said support body (130) and said support plate (110) comprising respective interaction elements (118, 119, 120, 121, 134, 135, 136) adapted to guide the reciprocal rotation of said support body (130) and said support plate (110) between a first stable opening position of said hinge assembly for glasses (100) and a second stable closing position of said hinge assembly for glasses (100) and between said first stable opening position of said hinge assembly for glasses (100) and a third unstable extra-opening position of said hinge assembly for glasses (100), said support body (130) comprising a third hole (132) and a fourth hole (133) coaxial between them and having axes substantially parallel to said vertical direction z, said support body (130) comprising an housing chamber (138) open towards the outside and in communication with said third hole (132) and said fourth hole (133);
- an arm element (150) that presents a first arm portion (160) and a second arm portion (170) spaced and parallel to each other and a bridge connection portion (151) that connects said first arm portion (160) and said second arm portion (170) between them, said first arm portion (160) presenting a first perforated end portion (161) arranged at said first through hole (115) and a second perforated end portion (162) arranged at said third hole (132), said second arm portion (170) presenting a third perforated end portion (171) arranged at said second through hole (116) and a fourth perforated end portiond (172) arranged at said fourth hole (133), where said third hole (132), said second perforated end portion (162), said fourth perforated end portion (172) and said fourth hole (133) are crossed by at least one coupling pin (137), and where a first coupling element (122) and a second coupling element (123) cross at least partially respectively said first through hole (115) and said second through hole (116) and couple respectively with said first perforated end portion (161) and said third perforated end portion (171);
- a torsion spring (139) housed in said housing chamber (138) and having at least one tubular portion (140) crossed at least partially by said at least one coupling pin (137), a first torsion portion (141) in contrast against an inner wall of said housing chamber (138) and at least one second torsion portion (142) in contrast against said bridge connection portion (151), said first torsion portion (141) moving closer to said at least one second torsion portion (142) loading said torsion spring (139) with a twisting moment when the hinge assembly for glasses (100) is pushed to pass from said first stable opening position to said third unstable extra-opening position, said hinge assembly for glasses (100) returning from the third unstable extra-opening position to the first stable opening position when released for the effect of the loaded twisting moment of said torsion spring (139).

2. Hinge assembly for glasses (100) according to claim 1, wherein said torsion spring (139) is of the double torsion type comprising two of said tubular portions (140) and two of said second torsion portions (142) opposite, and wherein said first torsion portion (141) is bridge-shaped, said housing chamber (138) presenting internally a protruding anchorage portion (138') that extends from a wall of said housing chamber (138), said first torsion portion (141) being anchored to said protruding anchorage portion (138').

3. Hinge assembly for glasses (100) according to claim 2, wherein said tubular portions (140) are completely crossed by said at least one coupling pin (137).

4. Hinge assembly for glasses (100) according to claim 2 comprising two of said coupling pins (137), each of said tubular portions (140) being partially crossed by one of said coupling pins (137) respectively.

5. Hinge assembly for glasses (100) according to one ore more of the preceding claims, wherein said interaction elements (118, 119, 120, 121, 134, 135, 136) comprise:
- at least one guide element (118, 119) interposed between said first cantilevered portion (113) and said second cantilevered portion (114), said at least one guide element (118, 119) presenting a respective endstroke abutment portion (118', 119');
- a guide end (134) of said support body (130) shaped to slide on said at least one guide element (118, 119) in order to guide the reciprocal rotation of said support body (130) and said support plate (110) between said first stable opening position and said third unstable extra-opening position, said guide end (134) being configured to be in contact with said endstroke abutment portion (118', 119') when the hinge assembly for glasses (100) is in the first stable opening position;
- a first guide projection or first cam (120) and a second guide projection or second cam (121) made on said first cantilevered portion (113) and on said second cantileverd portion (114) respectively, said first guide projection or first cam (120) and said second guide projection or second cam (121) being parallel and opposite to each other;
- at least one free abutment wall (135, 136) of said support body (130) configured to slide on said first guide projection (120) and said second guide projection (121) in order to guide the reciprocal rotation of said support body (130) and said support plate (110) between said first stable opening position and said second stable closing position, said first guide projection (120) and said second guide projection (121) presenting a first flat abutment portion (120') and a second flat abutment portion (121'), respectively, on which said at least one free abutment wall (135, 136) abuts and stops by identifying the second stable closing position.

6. Hinge assembly for glasses (100) according to claim 5, wherein said at least one free abutment wall (135, 136) presents a first perimetric recess (135') and a second perimetric recess (136') facing said first cantilevered portion (113) and said second cantilevered portion (114) respectively, said first guide projection (120) presenting a first abutting protrusion (120") and said second guide projection (121) presenting a second abutting protrusion (121"), said first abutting protrusion (120") and said second abutting protrusion (121") being shaped to fit into said first perimetric recess (135') and said second perimetric recess (136'), respectively, when the hinge assembly for glasses (100) is in the second stable closing position.

7. Hinge assembly for glasses (100) according to one or more of the preceding claims, wherein said hinge assembly for glasses (100) comprises a cover element (230) integral with said support body (130), said cover element (230) being configured to abut on said first cantilevered portion (113) and said second cantilevered portion (114) when said hinge assembly for glasses (100) is in the second stable closing position.

8. Hinge assembly for glasses (100) according to one or more claims from 2 to 7, wherein said at least one guide element (118, 119) is made in a single piece with said support plate (110).

9. Hinge assembly for glasses (100) according to claim 8, wherein said support plate (110) comprises a first side wall (128) and a second side wall (129) that connect said first cantilevered portion (113) to said second cantilevered portion (114) and said at least one guide element (118, 119) is made in a single piece with said second side wall (129).

10. Hinge assembly for glasses (100) according to one or more claims from 2 to 7, wherein said at least one guide element (118, 119) is coupled with said support plate (110).

11. Hinge assembly for glasses (100) according to one or more claims from 2 to 10, wherein said at least one guide element (118, 119) is in number equal to two, each one arranged at a respective cantilevered portion (113, 114).

12. Hinge assembly for glasses (100) according to one or more claims from 2 to 11, wherein said at least one free abutment wall (135, 136) is in number equal to two, where said free abutment walls (135, 136) correspond to lateral walls of two free edges of the support body (130) facing the first cantilevered portion (113) and the second cantilevered portion (114) respectively.

13. Glasses (300) comprising:
- front (311) adapted to carry two lenses and two temples (312), said temples (312) adapted to allow a user to wear glasses;
- two hinge assemblies for glasses (100) according to the present invention, each of which couples a respective temple (312) to said front (311).

## Patentansprüche

1. Scharnieranordnung für Brillen (100), die Folgendes umfasst:
- eine Stützplatte (110) mit einer im Wesentlichen flachen ersten Fläche (111), die dazu bestimmt ist, an einer Vorderseite (311) eines Rahmens (310) für eine Brille (300) angebracht zu sein, und einer im Wesentlichen flachen zweiten Fläche (112) entgegengesetzt und parallel zu der ersten Fläche (111), wobei die Stützplatte (110) einen ersten freitragenden Abschnitt (113) und einen zweiten freitragenden Abschnitt (114) parallel und entgegengesetzt zueinander umfasst, die sich von der zweiten Fläche (112) in einer Richtung im Wesentlichen senkrecht zu dieser erstrecken, wobei die freitragenden Abschnitte (113, 114) jeweils ein erstes Durchgangsloch (115) und ein zweites Durchgangsloch (116) präsentieren, die entgegengesetzt und entlang einer vertikalen Richtung z miteinander ausgerichtet sind;
- einen Stützkörper (130), der dazu bestimmt ist, an einem Bügel (312) für eine Brille (300) angebracht zu sein, wobei der Stützkörper (130) drehbar mit der Stützplatte (110) gekoppelt ist, wobei der Stützkörper (130) und die Stützplatte (110) jeweilige Interaktionselemente (118, 119, 120, 121, 134, 135, 136) umfassen, die dazu ausgelegt sind, die wechselseitige Drehung des Stützkörpers (130) und der Stützplatte (110) zwischen einer ersten stabilen Öffnungsposition der Scharnieranordnung für eine Brille (100) und einer zweiten stabilen Schließposition der Scharnieranordnung für eine Brille (100) und zwischen der ersten stabilen Öffnungsposition der Scharnieranordnung für eine Brille (100) und einer dritten instabilen zusätzlichen Öffnungsposition der Scharnieranordnung für eine Brille (100) zu führen, wobei der Stützkörper (130) ein drittes Loch (132) und ein viertes Loch (133) umfasst, die untereinander koaxial sind und Achsen im Wesentlichen parallel zu der vertikalen Richtung z aufweisen, wobei der Stützkörper (130) eine Aufnahmekammer (138) umfasst, die zur Außenseite offen ist und mit dem dritten Loch (132) und dem vierten Loch (133) in Verbindung steht;
- ein Armelement (150), das einen ersten Armabschnitt (160) und einen zweiten Armabschnitt (170) aufweist, die voneinander beabstandet und parallel sind, und einen Brückenverbindungsabschnitt (151), der den ersten Armabschnitt (160) und den zweiten Armabschnitt (170) zwischen sich verbindet, wobei der erste Armabschnitt (160) Folgendes aufweist: einen ersten perforierten Endabschnitt (161), der an dem ersten Durchgangsloch (115) angeordnet ist, und einen zweiten perforierten Endabschnitt (162), der an dem dritten Loch (132) angeordnet ist, wobei der zweite Armabschnitt (170) einen dritten perforierten Endabschnitt (171), der an dem zweiten Durchgangsloch (116) angeordnet ist, und einen vierten perforierten Endabschnitt (172), der an dem vierten Loch (133) angeordnet ist, aufweist, wobei das dritte Loch (132), der zweite perforierte Endabschnitt (162), der vierte perforierte Endabschnitt (172) und das vierte Loch (133) von mindestens einen Kopplungsstift (137) gekreuzt werden, und wobei ein erstes Kopplungselement (122) und ein zweites Kopplungselement (123) mindestens teilweise jeweils das erste Durchgangsloch (115) und das zweite Durchgangsloch (116) kreuzen und jeweils mit dem ersten perforierten Endabschnitt (161) und dem dritten perforierten Endabschnitt (171) koppeln;
- eine Torsionsfeder (139), die in der Aufnahmekammer (138) untergebracht ist und mindestens einen rohrförmigen Abschnitt (140) aufweist, der mindestens teilweise von dem mindestens einen Kopplungsstift (137) gekreuzt wird, einen ersten Torsionsabschnitt (141) im Kontrast gegen eine Innenwand der Gehäusekammer (138) und mindestens einen zweiten Torsionsabschnitt (142) im Kontrast gegen den Brückenverbindungsabschnitt (151), wobei sich der erste Torsionsabschnitt (141) näher an den mindestens einen zweiten Torsionsabschnitt (142) bewegt und die Torsionsfeder (139) mit einem Verdrehmoment belastet, wenn die Scharnieranordnung für Brillen (100) geschoben wird, um von der ersten stabilen Öffnungsposition in die dritte instabile zusätzliche Öffnungsposition zu gelangen, wobei die Scharnieranordnung für Brillen (100) bei Freigabe durch Wirkung des belasteten Verdrehmoments der Torsionsfeder (139) aus der dritten instabilen zusätzlichen Öffnungsstellung in die erste stabile Öffnungsstellung zurückkehrt.

2. Scharnieranordnung für Brillen (100) nach Anspruch 1, wobei die Torsionsfeder (139) vom Doppeltorsionstyp ist, der zwei der rohrförmigen Abschnitte (140) und zwei der zweiten Torsionsabschnitte (142) umfasst, die sich gegenüberliegen, und wobei der erste Torsionsabschnitt (141) brückenförmig ist, wobei die Aufnahmekammer (138) innen einen vorstehenden Verankerungsabschnitt (138') aufweist, der sich von einer Wand der Aufnahmekammer (138) erstreckt, wobei der erste Torsionsabschnitt (141) an dem vorstehenden Verankerungsabschnitt (138') verankert ist.

3. Scharnieranordnung für Brillen (100) nach Anspruch 2, wobei die rohrförmigen Abschnitte (140) vollständig von dem mindestens einen Kopplungsstift (137) gekreuzt werden.

4. Scharnieranordnung für Brillen (100) nach Anspruch 2, umfassend zwei der Kopplungsstifte (137), wobei jeder der rohrförmigen Abschnitte (140) teilweise von jeweils einem der Kopplungsstifte (137) gekreuzt wird.

5. Scharnieranordnung für Brillen (100) nach einem oder mehreren der vorhergehenden Ansprüche, wobei die Interaktionselemente (118, 119, 120, 121, 134, 135, 136) Folgendes umfassen:
- mindestens ein Führungselement (118, 119), das zwischen dem ersten freitragenden Abschnitt (113) und dem zweiten freitragenden Abschnitt (114) angeordnet ist, wobei das mindestens eine Führungselement (118, 119) einen jeweiligen Endhubanschlagabschnitt (118', 119') aufweist;
- ein Führungsende (134) des Stützkörpers (130), das so geformt ist, dass es auf dem mindestens einen Führungselement (118, 119) gleitet, um die reziproke Drehung des Stützkörpers (130) und der Stützplatte (110) zwischen der ersten stabilen Öffnungsposition und der dritten instabilen zusätzlichen Öffnungsposition zu führen, wobei das Führungsende (134) so ausgelegt ist, dass es in Kontakt mit dem Endhubanschlagabschnitt (118', 119') ist, wenn sich die Scharnieranordnung für Brillen (100) in der ersten stabilen Öffnungsposition befindet;
- einen ersten Führungsvorsprung oder einen ersten Nocken (120) und einen zweiten Führungsvorsprung oder einen zweiten Nocken (121), die an dem ersten freitragenden Abschnitt (113) bzw. an dem zweiten freitragenden Abschnitt (114) ausgebildet sind, wobei der erste Führungsvorsprung oder der erste Nocken (120) und der zweite Führungsvorsprung oder der zweite Nocken (121) parallel und entgegengesetzt zueinander sind;
- mindestens eine freie Anschlagwand (135, 136) des Stützkörpers (130), die dazu ausgelegt ist, auf dem ersten Führungsvorsprung (120) und dem zweiten Führungsvorsprung (121) zu gleiten, um die reziproke Drehung des Stützkörpers (130) und der Stützplatte (110) zwischen der ersten stabilen Öffnungsposition und der zweiten stabilen Schließposition zu führen, wobei der erste Führungsvorsprung (120) und der zweite Führungsvorsprung (121) einen ersten flachen Anschlagabschnitt (120') bzw. einen zweiten flachen Anschlagabschnitt (121') aufweisen, an dem die mindestens eine freie Anschlagwand (135, 136) anliegt und durch Identifizieren der zweiten stabilen Schließstellung stoppt.

6. Scharnieranordnung für Brillen (100) nach Anspruch 5, wobei die mindestens eine freie Anschlagwand (135, 136) eine erste Umfangsausnehmung (135') und eine zweite Umfangsausnehmung (136') aufweist, die dem ersten freitragenden Abschnitt (113) bzw. dem zweiten freitragenden Abschnitt (114) zugewandt sind, wobei der erste Führungsvorsprung (120) einen ersten anliegenden Vorsprung (120") aufweist und der zweite Führungsvorsprung (121) einen zweiten anliegenden Vorsprung (121') aufweist, wobei der erste anliegende Vorsprung (120") und der zweite anliegende Vorsprung (121") so geformt sind, dass sie in die erste Umfangsausnehmung (135') bzw. die zweite Umfangsausnehmung (136') passen, wenn sich die Scharnieranordnung für Brillen (100) in der zweiten stabilen Schließposition befindet.

7. Scharnieranordnung für Brillen (100) nach einem oder mehreren der vorhergehenden Ansprüche, wobei die Scharnieranordnung für Brillen (100) ein Abdeckelement (230) umfasst, das integral mit dem Stützkörper (130) ausgebildet ist, wobei das Abdeckelement (230) dazu ausgelegt ist, an dem ersten freitragenden Abschnitt (113) und dem zweiten freitragenden Abschnitt (114) anzuliegen, wenn sich die Scharnieranordnung für Brillen (100) in der zweiten stabilen Schließposition befindet.

8. Scharnieranordnung für Brillen (100) nach einem oder mehreren der Ansprüche 2 bis 7, wobei das mindestens eine Führungselement (118, 119) einstückig mit der Stützplatte (110) hergestellt ist.

9. Scharnieranordnung für Brillen (100) nach Anspruch 8, wobei die Stützplatte (110) eine erste Seitenwand (128) und eine zweite Seitenwand (129) umfasst, die den ersten freitragenden Abschnitt (113) mit dem zweiten freitragenden Abschnitt (114) verbinden, und das mindestens eine Führungselement (118, 119) einstückig mit der zweiten Seitenwand (129) hergestellt ist.

10. Scharnieranordnung für Brillen (100) nach einem oder mehreren der Ansprüche 2 bis 7, wobei das mindestens eine Führungselement (118, 119) mit der Stützplatte (110) gekoppelt ist.

11. Scharnieranordnung für Brillen (100) nach einem oder mehreren der Ansprüche 2 bis 10, wobei das mindestens eine Führungselement (118, 119) eine Anzahl gleich zwei aufweist, wobei jedes an einem jeweiligen freitragenden Abschnitt (113, 114) angeordnet ist.

12. Scharnieranordnung für Brillen (100) nach einem oder mehreren der Ansprüche 2 bis 11, wobei die mindestens eine freie Anschlagwand (135, 136) eine Anzahl gleich zwei aufweist, wobei die freien Anschlagwände (135, 136) Seitenwänden von zwei freien Kanten des Stützkörpers (130) entsprechen, die dem ersten freitragenden Abschnitt (113) bzw. dem zweiten freitragenden Abschnitt (114) zugewandt sind.

13. Brille (300), die Folgendes umfasst:
- eine Vorderseite (311), die dazu ausgelegt ist, zwei Linsen und zwei Bügel (312) zu tragen, wobei die Bügel (312) dazu ausgelegt sind, einem Benutzer zu ermöglichen, die Brille zu tragen;
- zwei Scharnieranordnungen für Brillen (100) gemäß der vorliegenden Erfindung, von denen jede einen jeweiligen Bügel (312) mit der Vorderseite (311) koppelt.

## Revendications

1. Ensemble charnière pour lunettes (100), comprenant:
- une plaque de support (110) ayant une première face (111) sensiblement plate prévue pour être appliquée sur un devant (311) d'une monture (310) pour lunettes (300), et une seconde face (112) sensiblement plate opposée et parallèle à ladite première face (111), ladite plaque de support (110) comprenant une première partie en porte-à-faux (113) et une seconde partie en porte-à-faux (114) parallèles et opposées l'une à l'autre s'étendant depuis ladite seconde face (112) dans une direction sensiblement perpendiculaire à celle-ci, lesdites parties en porte-à-faux (113, 114) présentant respectivement un premier trou traversant (115) et un deuxième trou traversant (116) opposés et alignés l'un avec l'autre le long d'une direction verticale z;
- un corps de support (130) prévu pour être appliqué sur une branche (312) pour des lunettes (300), ledit corps de support (130) étant couplé de façon rotative à ladite plaque de support (110), ledit corps de support (130) et ladite plaque de support (110) comprenant des éléments d'interaction respectifs (118, 119, 120, 121, 134, 135, 136) adaptés pour guider la rotation réciproque dudit corps de support (130) et de ladite plaque de support (110) entre une première position d'ouverture stable dudit ensemble charnière pour lunettes (100) et une deuxième position de fermeture stable dudit ensemble charnière pour lunettes (100) et entre ladite première position d'ouverture stable dudit ensemble charnière pour lunettes (100) et une troisième position d'ouverture supplémentaire instable dudit ensemble charnière pour lunettes (100), ledit corps de support (130) comprenant un troisième trou (132) et un quatrième trou (133) coaxiaux entre eux et ayant des axes sensiblement parallèles à ladite direction verticale z, ledit corps de support (130) comprenant une chambre de logement (138) ouverte vers l'extérieur et en communication avec ledit troisième trou (132) et ledit quatrième trou (133);
- un élément bras (150) qui présente une première partie de bras (160) et une seconde partie de bras (170) espacées et parallèles l'une à l'autre et une partie de liaison en pont (151) qui relie ladite première partie de bras (160) et ladite seconde partie de bras (170) entre elles, ladite première partie de bras (160) présentant une première partie d'extrémité perforée (161) agencée au niveau dudit premier trou traversant (115) et une deuxième partie d'extrémité perforée (162) agencée au niveau dudit troisième trou (132), ladite seconde partie de bras (170) présentant une troisième partie d'extrémité perforée (171) agencée au niveau dudit deuxième trou traversant (116) et une quatrième partie d'extrémité perforée (172) agencée au niveau dudit quatrième trou (133), où ledit troisième trou (132), ladite deuxième partie d'extrémité perforée (162), ladite quatrième partie d'extrémité perforée (172), et ledit quatrième trou (133) sont croisés par au moins une goupille de couplage (137), et où un premier élément de couplage (122) et un second élément de couplage (123) croisent au moins partiellement respectivement ledit premier trou traversant (115) et ledit deuxième trou traversant (116) et se couplent respectivement à ladite première partie d'extrémité perforée (161) et à ladite troisième partie d'extrémité perforée (171);
- un ressort de torsion (139) logé dans ladite chambre de logement (138) et ayant au moins une partie tubulaire (140) croisée au moins partiellement par ladite au moins une goupille de couplage (137), une première partie de torsion (141) en contraste contre une paroi intérieure de ladite chambre de logement (138) et au moins une seconde partie de torsion (142) en contraste contre ladite partie de liaison en pont (151), ladite première partie de torsion (141) se déplaçant plus près de ladite au moins une seconde partie de torsion (142) chargeant ledit ressort de torsion (139) avec un moment de torsion lorsque l'ensemble charnière pour lunettes (100) est poussé pour passer de ladite première position d'ouverture stable à ladite troisième position d'ouverture supplémentaire instable, ledit ensemble charnière pour lunettes (100) retournant de la troisième position d'ouverture supplémentaire instable à la première position d'ouverture stable lorsqu'il est libéré en raison de l'effet du moment de torsion chargé dudit ressort de torsion (139).

2. Ensemble charnière pour lunettes (100) selon la revendication 1, dans lequel ledit ressort de torsion (139) est du type à double torsion comprenant deux desdites parties tubulaires (140) et deux desdites secondes parties de torsion (142) opposées, et dans lequel ladite première partie de torsion (141) est en forme en pont, ladite chambre de logement (138) présentant de façon interne une partie d'ancrage proéminente (138') qui s'étend depuis une paroi de ladite chambre de logement (138), ladite première partie de torsion (141) étant ancrée sur ladite partie d'ancrage proéminente (138').

3. Ensemble charnière pour lunettes (100) selon la revendication 2, dans lequel lesdites parties tubulaires (140) sont complètement croisées par ladite au moins une goupille de couplage (137).

4. Ensemble charnière pour lunettes (100) selon la revendication 2 comprenant deux desdites goupilles de couplage (137), chacune desdites parties tubulaires (140) étant partiellement croisée par une desdites goupilles de couplage (137) respectivement.

5. Ensemble charnière pour lunettes (100) selon une ou plusieurs des revendications précédentes, dans lequel lesdits éléments d'interaction (118, 119, 120, 121, 134, 135, 136) comprennent:
- au moins un élément guide (118, 119) interposé entre ladite première partie en porte-à-faux (113) et ladite seconde partie en porte-à-faux (114), ledit au moins un élément guide (118, 119) présentant une partie de butée de fin de course respective (118', 119');
- une extrémité guide (134) dudit corps de support (130) formée pour coulisser sur ledit au moins un élément guide (118, 119) afin de guider la rotation réciproque dudit corps de support (130) et ladite plaque de support (110) entre ladite première position d'ouverture stable et ladite troisième position d'ouverture supplémentaire instable, ladite extrémité guide (134) étant configurée pour être en contact avec ladite partie de butée de fin de course (118', 119') lorsque l'ensemble charnière pour lunettes (100) est dans la première position d'ouverture stable;
- une première saillie guide ou première came (120) et une seconde saillie guide ou seconde came (121) faites sur ladite première partie en porte-à-faux (113) et sur ladite seconde partie en porte-à-faux (114) respectivement, ladite première saillie guide ou première came (120) et ladite seconde saillie guide ou seconde came (121) étant parallèles et opposées l'une à l'autre;
- au moins une paroi de butée libre (135, 136) dudit corps de support (130) configurée pour coulisser sur ladite première saillie guide (120) et ladite seconde saillie guide (121) afin de guider la rotation réciproque dudit corps de support (130) et de ladite plaque de support (110) entre ladite première position d'ouverture stable et ladite deuxième position de fermeture stable, ladite première saillie guide (120) et ladite seconde saillie guide (121) présentant une première partie de butée plate (120') et une seconde partie de butée plate (121'), respectivement, sur lesquelles ladite au moins une paroi de butée libre (135, 136) vient en butée et s'arrête en identifiant la deuxième position de fermeture stable.

6. Ensemble charnière pour lunettes (100) selon la revendication 5, dans lequel ladite au moins une paroi de butée libre (135, 136) présente un premier évidement périmétrique (135') et un second évidement périmétrique (136') faisant face à ladite première partie en porte-à-faux (113) et à ladite seconde partie en porte-à-faux (114) respectivement, ladite première saillie guide (120) présentant une première proéminence de venue en butée (120") et ladite seconde saillie guide (121) présentant une seconde proéminence de venue en butée (121"), ladite première proéminence de venue en butée (120") et ladite seconde proéminence de venue en butée (121") étant formées pour s'ajuster dans ledit premier évidement périmétrique (135') et ledit second évidement périmétrique (136'), respectivement, lorsque l'ensemble charnière pour lunettes (100) est dans la deuxième position de fermeture stable.

7. Ensemble charnière pour lunettes (100) selon une ou plusieurs des revendications précédentes, dans lequel ledit ensemble charnière pour lunettes (100) comprend un élément couvercle (230) monobloc avec ledit corps de support (130), ledit élément couvercle (230) étant configuré pour venir en butée sur ladite première partie en porte-à-faux (113) et ladite seconde partie en porte-à-faux (114) lorsque ledit ensemble charnière pour lunettes (100) est dans la deuxième position de fermeture stable.

8. Ensemble charnière pour lunettes (100) selon une ou plusieurs revendications 2 à 7, dans lequel ledit au moins un élément guide (118, 119) est fait de façon monopièce avec ladite plaque de support (110).

9. Ensemble charnière pour lunettes (100) selon la revendication 8, dans lequel ladite plaque de support (110) comprend une premier paroi de côté (128) et une seconde paroi de côté (129) qui relient ladite première partie en porte-à-faux (113) à ladite seconde partie en porte-à-faux (114) et ledit au moins un élément guide (118, 119) est fait de façon monopièce avec ladite seconde paroi de côté (129).

10. Ensemble charnière pour lunettes (100) selon une ou plusieurs revendications 2 à 7, dans lequel ledit au moins un élément guide (118, 119) est couplé à ladite plaque de support (110).

11. Ensemble charnière pour lunettes (100) selon une ou plusieurs revendications 2 à 10, dans lequel ledit au moins un élément guide (118, 119) est en nombre égal à deux, chacun agencé au niveau d'une partie en porte-à-faux respective (113, 114).

12. Ensemble charnière pour lunettes (100) selon une ou plusieurs revendications 2 à 11, dans lequel ladite au moins une paroi de butée libre (135, 136) est en nombre égal à deux, où lesdites parois de butée libres (135, 136) correspondent à des parois latérales de deux bords libres du corps de support (130) faisant face à la première partie en porte-à-faux (113) et à la seconde partie en porte-à-faux (114) respectivement.

13. Lunettes (300), comprenant:
- un devant (311) adapté pour supporter deux verres et deux branches (312), lesdites branches (312) étant adaptées pour permettre à un utilisateur de porter des lunettes;
- deux ensembles charnières pour lunettes (100) selon la présente invention, chacun desquels couple une branche respective (312) audit devant (311).
